# EUROPEAN PATENT SPECIFICATION

(11) **EP 1 575 733 B1**
(45) Date of publication and mention of the grant of the patent: **11.01.2012**
(21) Application number: 03773746.7
(22) Date of filing: 12.11.2003
(51) Int. Cl.: B23K 9/12

(54) **ELECTRODE LINER TUBE**
ELEKTRODENROHR MIT AUSKLEIDUNG
TUBE DE GARNITURE D'ELECTRODE

(30) Priority: 13.11.2002 FI 20020455 U
(43) Date of publication of application: 21.09.2005
(73) Proprietor: KEMPPI OY, 15801 Lahti (FI)
(72) Inventor: HÄMÄLÄINEN, Jani, FIN-15610 Lahti (FI); MÄKIMAA, Tapani, FIN-15800 Lahti (FI); HÄMÄLÄINEN, Olli, FIN-15540 Villähde (FI); TOIVONEN, Hannu, 17200 Vääksy (FI); HOKKANEN, Taisto, FIN-15240 Lahti (FI)
(74) Representative: Arvela, Sakari Mikael
(86) International application number: PCT/FI2003/000858
(87) International publication number: WO 2004/043640

(56) References cited:
- DE-A1- 2 058 050
- US-A- 3 248 515

## Description

The present invention relates to a filler wire guide tube according to the preamble of patent claim 1 for feeding filler wire in a MIG welding apparatus (See, for example, US3 248 515).

In MIG welding, the welding current circuit is established via the filler wire or core-flux wire and the workpiece. The filler wire is fed continuously into the weld puddle, whereby it forms the weld bead as it cools down with the metal molten from the workpiece. The filler wire must be basically of the same material as the workpiece and also in demanding welds, the alloy composition of the filler wire should be as close as possible to that of the workpiece. The most commonly used filler wire materials are steel, stainless steel and aluminum. Welding may also be carried out using core-flux wire that in its center has additives capable of controlling the behavior of the weld puddle. The filler wire is fed via a welding gun whereto it is passed along a tubular wire guide conduit. The wire feed mechanism generally resides in the welding apparatus wherefrom the mechanism pushes the filler wire forward in the wire guide tube. The wire guide tube must be made rather long to give the welder a sufficiently large operating area. In manual welding equipment, even apparatuses intended for nonprofessional use must have a wire guide at least 2 to 3 m long and in professional equipment even substantially longer. Automatic welding equipment, e.g., implemented as robotic welding systems must have very long wire guides, even in excess of 10 m.

The filler wire diameter is typically 0.8 -1.6 mm, and the stiffness of the wire is dependent on its material. Inasmuch as thin filler wires in particular are extremely flexible, the wire guide must give support to the wire during its travel. Since the wire feed normally takes place by a pushing action, the wire cannot be tensioned for secure conveyance. Hence, after leaving the feed roller, the wire seeks support from inner wall of the wire guide liner so that the outer surface of the wire glides along liner inner wall. As a result, dirt from the wire surface and debris of the wire material itself adhere to the liner inner wall during welding thus forming agglomerations that jam the travel of the wire. After a sufficient amount of dirt/debris has accumulated on the liner inner wall, the mechanical resistance to the filler wire travel increases and the wire feed speed begins to fluctuate so much as to make welding sticky, in which situation it may become problematic to achieve a suffiently good weld quality. Since the wire guide is rather long, even the smallest dirt agglomerations rapidly increase the mechanical resistance to the wire travel eventually leading to a plugged wire guide that needs careful cleaning or replacement with a new guide.

Another problem hampering filler wire feed is caused by the bending of the wire guide. If the wire guide is distorted by one or more sharp bends, the mechanical resistance to filler wire feed increases substantially thus frequently stopping filler wire feed. Yet, the wire guide tube must be designed flexible enough to allow taking the welding gun to workplaces sometimes very difficult to reach.

Plural attempts have been made to overcome the above-described problems. In SE Pat. Appl. No. 8504966-6 is described a flexible wire guide having its inner liner comprised of a string of successive glass rings. This arrangement provides a flexible guide construction whose inner liner is resistant to wear. However, the glass rings are brittle and even one broken ring fouls the wire guide conduit. Such a wire guide construction is also very expensive to manufacture. In SE Pat. No. 354,597 is further described a wire guide structure having the cross section of the wire guide lumen shaped triangular or in the shape of an inwardly three-pointed star. As a result, the area of the wire guide inner surface contacting the wire becomes small, whereby the mechanical resistance to wire feed is low. A problem of this wire guide structure is that it is suitable for one wire diameter only and, due to its small contact surface with the wire, the wear rate of the plastic liner of the wire guide is rapid. The wire guide may also be implemented using a flexible, metallic, helical conduit or having a spring-like outer jacket or some other bendable structure. Such wire guide structures are disclosed in patent publications NO 130894, JP 19840197178, CH 421340 and US 2,694,130. Also these structures are hampered by high mechanical friction and resistance of filler wire feed, as well as fouling of the wire guide liner due to accumulation of dirt and wire material. Many of these structures are also very complicated due to their multilayer construction comprising plural metal and jacket portions.

EP 0 291 639 discloses a thermoplastic composite pipe tube for corrosive fluids and gases, wherein the inner tube may include particulate reinforcing particles such as carbon black. To reduce the coefficient of friction the inner layer may include materials such as polytetrafluoroethylene.

It is an object of the invention to provide a filler wire guide offering a wire travel friction lower than that of prior-art ducts, reduced accumulation of debris on the duct inner wall and a sufficiently high bending resistance to prevent formation of sharp bends on the wire guide.

The invention is achieved by a filler wire guide tube according to claim 1.

The invention offers significant benefits.

The mechanical resistance of the wire guide in accordance with the invention to the filler wire travel is extremely low, even lower than the wire travel friction in a wire guide having its liner made entirely of PTFE. The structure of the present wire guide is extremely simple inasmuch as it comprises an integral uniform conduit only. Hence, the present wire guide structure is very cost-effective to manufacture as compared with wire guides comprising a separate flexible jacket on a wire guide incorporating a glide surface. Having the outer layer of the wire guide made of a stiff and hard material, the guide cannot accidentally bend into a sharp kink when the welding gun at the distal end of the guide is moved during welding operations. As a result, reliable filler wire feed is assured. The wire guide according to the invention accumulates substantially less dirt and filler wire material on its inner wall thus giving the wire guide a long service life and securing smooth wire feed even after long-term use. The wire guide can be manufactured by plastic pipe extruders as two-layer extrusion. Suitable extruder equipment for this purpose are readily available.

In the following, the invention is examined with the help of exemplary embodiments.

The wire guide according to the invention comprises two layers that during the wire guide coextrusion become integrally bonded to each other. While layers of the wire guide need not necessarily be separate, concurrent technologies have difficulties in single-step extrusion of a single-layer conduit having only its inner wall blended with an additive. The only essential characterizing feature of the invention can be stated as follows: the surface of the wire guide inner wall has an annular region that contains an additive, while the surrounding region is free from the additive. For simplicity, however, the following description discusses two separate layers.

The outer layer of the wire guide is*,* according to the present invention, made of high-density polyethylene (HDPE) that forms a sufficiently stiff reinforcing layer and gives sufficient stiffness required from the wire guide. That is, the wire guide must have quite good stiffness to prevent the wire guide from bending into an excessively small radius. The inner surface of the wire guide wall has a glide layer that also basically is of high-density polyethylene. To the base material of the glide layer is blended about 15 % of an additive comprising polytetrafluoroethylene and silicon micropowder. In the glide layer, the amount of PTFE in the weight of the glide layer is about 13 wt. %, while the amount of silicon micropowder is 1 - 2 wt. %. The variation range of additives is: overall amount of additive 12 - 20 wt. %, wherein PTFE 12 -17 wt. % and silicon 1 - 3 wt. %. Additional additives comprises*,* according to the present invention, molybdenum sulfide, advantageously in particulate form, in order to improve the inherently good glide and antistick properties of the inner layer. Both of the additives are used in powderized form thus having an extremely small particle size. PTFE gives the inner layer good glide properties and silicon powder promotes correct distribution of particulate PTFE in the base material of the glide layer. The silicon powder also performs as a stabilizer of the glide properties of the inner layer. The composition described above provides a hard and durable glide layer that simultaneously has good glide properties. The glide layer is made about 300 - 400 µm thick. The inner diameter of the guide tube lumen may be varied according to the application, whereby in conjunction with conventionally used filler wires the wire guide inner diameter is selected to be in the range of 2 - 4 mm and the outer diameter respectively in the range of 4 - 7 mm. As the wire guide outer diameter is rather small, it is extremely important that the outer layer providing the structural stiffness is sufficiently strong.

The wire guide tube is manufactured, e.g., by extruding the first layer of blended material through the annular orifice formed between the tube-forming mandrel and die, whereupon the unblended outer layer is extruded on the first layer in a second die. The first layer, that is, the glide layer made of a polymer blended with the additive is advantageously 200 - 500 µm thick. The coextrusion of the layers may take place in a dual-orifice die almost simultaneously or, alternatively, extrusion is carried out in separate steps. However, the invention is not limited to any specific tube manufacturing method or technique, but rather, the wire guide tube can be fabricated using any method giving the desired end result. Obviously, the tube may comprise even multiple layers. When so desired, the wire guide tube may be coated with a flexible or insulating sheath, but this kind of protection is rarely necessary.

## Claims

1. A filler wire guide tube for guiding a filler wire, the base material of the wire guide tube being plastic, **characterized in that** the cross section of the wire guide tube is formed by an inner region containing a particulate additive and an outer layer not blended with such an additive,
with the additive comprising at least polytetrafluoroethylene (PTFE) and molybdene sulfide,
wherein the base material of the wire guide tube is high-density polyethylene (HDPE).

2. The filler wire guide of patent claim 1, **characterized in that** the additive composition includes particulate silicon.

3. The filler wire guide of patent claim 1 or 2, **characterized in that** the amount of the additive composition is about 12 - 20 % in the weight of the additive containing region, and the additive composition comprises polytetrafluoroethylene (PTFE) by about 12 - 17 wt. % and silicon by about 1 - 3 wt. %.

4. The filler wire guide of any one of patent claims 1 - 3, **characterized in that** the thickness of the additive containing region is 200 - 500 µm.

5. The filler wire guide of any one of patent claims 1 - 4, **characterized in that** the wire guide inner diameter is in the range of 2 - 4 mm and the outer diameter in the range of 4 - 7 mm.

## Patentansprüche

1. Ein Fülldraht-Führungsrohr zum Führen eines Fülldrahtes, wobei das Basismaterial des Draht-Führungsrohres Kunststoff ist, **dadurch gekennzeichnet, dass** der Querschnitt des Draht-Führungsrohres aus einem Innenbereich, der einen partikulären Zusatzstoff aufweist, und einer äußeren Schicht, die nicht mit einem derartigen Zusatzstoff vermischt ist, gebildet ist,
wobei der Zusatzstoff mindestens Polytetrafluorethylen (PTFE) und Molybdänsulfid aufweist,
wobei das Basismaterial des Draht-Führungsrohres Polyethylen hoher Dichte (HDPE) ist.

2. Das Fülldraht-Führungsrohr gemäß Anspruch 1, **dadurch gekennzeichnet, dass** die Zusatzstoff-Zusammensetzung partikuläres Silizium aufweist.

3. Das Fülldraht-Führungsrohr gemäß Anspruch 1 oder 2, **dadurch gekennzeichnet, dass** die Menge der Zusatzstoff-Zusammensetzung bei ungefähr 12 Gew.-% bis 20 Gew.-% des den Zusatzstoff aufweisenden Bereichs liegt und die Zusatzstoff-Zusammensetzung ungefähr 12 Gew.-% bis 17 Gew.-% Polytetrafluorethylen (PTFE) und ungefähr 1 Gew.-% bis 3 Gew.-% Silizium aufweist.

4. Das Fülldraht-Führungsrohr gemäß irgendeinem der Ansprüche 1 bis 3, **dadurch gekennzeichnet, dass** die Dicke des den Zusatzstoff enthaltenden Bereichs 200 µm bis 500 µm beträgt.

5. Das Fülldraht-Führungsrohr gemäß irgendeinem der Ansprüche 1 bis 4, **dadurch gekennzeichnet, dass** der Innendurchmesser der Drahtführung im Bereich von 2 mm bis 4 mm liegt und der Außendurchmesser im Bereich von 4 mm bis 7 mm liegt.

## Revendications

1. Tube guide-fil de remplissage permettant de guider un fil de remplissage, le matériau de base du tube guide-fil étant du plastique, **caractérisé en ce que** la section du tube guide-fil est formée d'une région interne contenant un additif particulaire et d'une couche externe non mélangée avec un tel additif,
l'additif comprenant au moins du poly(tétrafluoroéthylène) (PTFE) et du sulfure de molybdène,
dans lequel le matériau de base du tube guide-fil est du poly(éthylène) haute densité (PEHD).

2. Guide-fil de remplissage selon la revendication 1, **caractérisé en ce que** la composition de l'additif inclut du silicium particulaire.

3. Guide-fil de remplissage selon la revendication 1 ou 2, **caractérisé en ce que** la quantité de la composition d'additif est d'environ 12 à 20 % en poids de la région contenant l'additif, et la composition d'additif comprend environ 12 à 17 % en poids de poly(tétrafluoroéthylène) (PTFE) et environ 1 à 3 % en poids de silicium.

4. Guide-fil de remplissage selon l'une quelconque des revendications 1 à 3, **caractérisé en ce que** l'épaisseur de la région contenant l'additif est de 200 à 500 µm.

5. Guide-fil de remplissage selon l'une quelconque des revendications 1 à 4, **caractérisé en ce que** le diamètre interne du guide-fil se situe dans la gamme de 2 à 4 mm, et le diamètre externe dans la gamme de 4 à 7 mm.
